# EUROPÄISCHE PATENTSCHRIFT

(11) **EP 3 936 925 B1**
(45) Veröffentlichungstag und Bekanntmachung des Hinweises auf die Patenterteilung: **31.07.2024**
(21) Anmeldenummer: 21182571.6
(22) Anmeldetag: 29.06.2021
(51) Int. Cl.: G02C 5/00, G02C 5/06, G02C 1/04

(54) **FLEXIBLE BRILLE**
FLEXIBLE SPECTACLES
LUNETTES FLEXIBLES

(30) Priorität: 29.06.2020 DE 202020103714 U
(43) Veröffentlichungstag der Anmeldung: 12.01.2022
(73) Patentinhaber: Krauter, Günter, 73635 Rudersberg (DE)
(72) Erfinder: Krauter, Günter, 73635 Rudersberg (DE)
(74) Vertreter: Prüfer & Partner mbB Patentanwälte · Rechtsanwälte

(56) Entgegenhaltungen:
- WO-A1-2017/053599
- WO-A1-96/24315
- DE-U1- 202005 009 131
- DE-U1- 202011 002 082
- US-A- 5 300 963
- US-A1- 2018 180 901
- US-B1- 9 261 711

## Beschreibung

Die vorliegende Erfindung bezieht sich auf eine Brille, welche zur Verwendung beim Sport, beispielsweise während dem Fahrradfahren oder Mountainbike-Fahren geeignet ist.

Im Bereich der für Sport geeigneten Brillen sind bereits Brillen mit verschiedenen Anforderungen bekannt, beispielsweise Skibrillen mit Polsterung gegen Kälte, spezielle Sonnenbrillen und Brillen zum Fahrradfahren mit speziellen aerodynamischen Eigenschaften.

Auch ist es bei vielen Sportarten, wie z.B. dem Radfahren, wichtig, dass eine Brille ausreichend Schutz gegen Umwelteinflüsse, wie z.B. Wind und Sonne bietet.

Brillen müssen Luftzüge, die bei schnelleren Geschwindigkeit auftreten, von den Augen des Trägers fernhalten, damit dem Tränen der Augen sowie dem Auftreten von Augenentzündungen vorgebeugt werden kann, welche bei einem Zug ans Auge entstehen können.

Ferner ist es essentiell, dass die Brillengläser die Augen des Trägers vor Sonnenlicht schützen, da zu viel Sonneneinstrahlung direkt ins Auge erstens zu Augenschäden führen kann und den Träger der Brille auch entsprechend blenden kann, was einen schlechteren Tragekomfort mit sich bringt, aber auch Unfallgefahren hervorrufen kann.

Aus diesem Grund muss eine für Outdoor-Sport geeignete Brille gut an der Stirn eines Trägers anliegen, damit zwischen der Stirn und der Brille möglichst wenig Sonnenlicht Wind zu den Augen des Trägers gelangen können.

Dies wird häufig durch ein Gummiband, welches am Hinterkopf des Trägers befestigt werden kann, erreicht.

Brillen, welche für Outdoor-Sportarten verwendet werden, müssen daher nicht nur bestimmte Schutzeigenschaften aufweisen (beispielsweise UV-Schutz), sondern müssen auch sportart-spezifischen Anforderungen genügen.

Im Stand der Technik ist aus dem Dokument DE29906003U1 eine Funktionsbrille mit manuell auswechselbaren Gläsern bekannt, wobei das Gestell der Brille gebogen und bis zu einem gewissen Grade flexibel ist. Dieses flexible Gestell dient vornehmlich dazu, dass durch leichte Verbiegung des Rahmens die Gläser dieser Brille eicht ausgewechselt werden können.

Ferner ist im Stand der Technik aus dem Dokument US 6969172 B2 eine Brille mit einem flexiblen oberen Teil des Rahmens bekannt, welche als Schutzbrille verwendet werden kann. Diese Brille weist den Vorteil auf, dass sie schnell und einfach auf- bzw. abgesetzt werden kann.

Ferner ist das Dokumente WO 96/24315 A1 bekannt, welches eine Brille offenbart, wobei deren Hauptrahmen ein Paar Linsenbefestigungsrahmen zum Befestigen von Linsen und Dichtungsbefestigungselementen aufweist. Entsprechende Dichtungen können am Gesicht um die Augenhöhle des Benutzers anliegen.

Ferner ist aus dem Stand der Technik das Dokument US 5 300 963 A1 bekannt, welches ebenfalls eine Brille offenbart. Der Linsenrand ist in der Innenfläche sowohl der oberen Seite als auch der äußeren seitlichen Seite mit mindestens einer schmalen Nut ausgebildet, die so geformt ist, dass sie sich zu ihrem Boden hin vergrößert. Jeder der Bügel ist in seiner Innenfläche mit mindestens einer schmalen Nut ausgebildet, die so geformt ist, dass sie sich zu ihrem Boden hin vergrößert.

Ferner ist aus dem Stand der Technik das Dokument US 9 261 711 B1 bekannt, welches ebenfalls eine Brille offenbart, welche einen Brillenrahmen, mindestens eine lösbar an dem Brillenrahmen installierte Linse, zwei Bügel und zwei Aufsteckbefestigungen umfasst. An jedem Ende des Brillengestells ist ein Verbindungsabschnitt ausgebildet, der einen Schlitz enthält. Die Linse hat eine Kerbe, die zu einem Abschnitt des Schlitzes des Verbindungsabschnitts passt. Jeder Bügel ist schwenkbar an dem Brillengestell angebracht und relativ zu dem Brillengestell zwischen einer aufgeklappten Position und einer zusammengeklappten Position drehbar.

Dokument DE 20 2005 009 131 U1 offenbart eine scharnierlose Brille, insbesondere Arbeitsschutzbrille, wobei die Bügel einstückig mit einem oberen Rahmenteil ausgebildet sind, und an dem oberen Rahmenteil Befestigungseinrichtungen für die Scheibe ausgebildet sind.

Möglich sind jedoch auch wenig flexible Rahmen mit gewisser Vorspannung, welche bei Aufbiegen eine Druckkraft bzw. Anpresskraft am Kopf eines Trägers hervorrufen.

Solche Brillen sind jedoch gerade beim längeren Tragen wenig komfortabel für den Träger, und es könnten sogar Druckstellen am Kopf des Trägers auftreten.

Brillen aus sehr flexiblen Materialien können allerdings nicht gewährleisten, dass diese dauerhaft am Kopf bzw. der Stirn des Trägers anliegen - diese können durch Stöße, Vibrationen durch Bodenunebenheiten beim Fahrradfahren sowie Bewegungen des Gesichts bzw. des Kopfes leicht verrutschen, wodurch der Kontakt zwischen Brille und Kopf verringert wird und die Schutzwirkung negativ beeinflusst würde.

Es ist daher Aufgabe der vorliegenden Erfindung, eine Brille für die Anwendung beim Sport bereitzustellen, welche die Augen des Trägers optimal vor Umwelteinflüssen schützt und welche auch beim Tragen über einen längeren Zeitraum einen entsprechenden Tragekomfort aufweist.

Diese Aufgabe wird durch eine Brille mit den Merkmalen gemäß Anspruch 1 der vorliegenden Anmeldung gelöst. Weitere vorteilhafte Ausgestaltungen der Erfindung sind Gegenstand der abhängigen Ansprüche.

Die vorliegende Anmeldung beinhaltet eine Brille, welche einen Rahmen sowie mindestens ein durchsichtiges Element aufweist, welches am Rahmen befestigt ist. Dieses durchsichtige Element ist ein Brillenglas, was für Anwendung beim Sport vorwiegend aus durchsichtigem Kunststoff ausgeführt ist. In der Brille können ein durchgehendes Glas oder aber auch zwei Gläser vorgesehen sein. Am Rahmen ist ein Befestigungsmittel zur Befestigung des Rahmens am Kopf des Trägers vorgesehen.

Die Funktionsbrille gemäß der vorliegenden Erfindung weist an ihrem Rahmen mindestens eine Aussparung auf. In der mindestens einen Aussparung ist ein elastisches Element vorgesehen und die mindestens eine Aussparung ist auf der innenliegenden, der Stirn eines Benutzers zugewandten Seite des Rahmens angeordnet. Die mindestens eine Aussparung erstreckt sich auf der innenliegenden, der Stirn eines Benutzers zugewandten Seite des Rahmens von oben nach unten, wobei die mindestens eine Aussparung von der oberen bis zur unteren Seite des Rahmens durchgehend verläuft, und das Material, aus welchem der Rahmen gefertigt ist, weist eine niedrigere Elastizätät auf als das elastische Element.

Das elastische Element weist Federungs- und Dämpfungseigenschaften auf und dient dazu, Bereiche des Rahmens mit besonderer Flexibilität bereitzustellen.

Eine solche Brille vereint die Vorteile von wenig flexiblen und flexiblen Rahmen: Der Rahmen selbst besteht über seine gesamte Erstreckung aus einem wenig flexiblem Material, welches beim Tragen dem gesamten Rahmen Stabilität verleiht und dafür sorgt, dass ein Kontakt zwischen Brille und Kopf bzw. Stirn des Trägers stets vorhanden ist. Weitere Vorteile eines Rahmens aus wenig flexiblem Material sind die geringe Anfälligkeit für Schäden bzw. Materialdegradation bei Sonneneinstrahlung, beispielsweise zu Sprödigkeit.

Durch die mindestens eine Aussparung ist das wenig flexible Material des Rahmens dünner, wodurch die Flexibilität an dieser Stelle in eine Richtung erhöht wird.

Eine Spannung, welche beispielsweise durch ein Aufweiten des Rahmens beim Tragen der Brille entsteht, kann durch die Aussparungen aufgenommen werden, und die Form das Rahmens kann sich verformen - die weiteren Abschnitte des Rahmens stehen dadurch unter keiner bzw. weniger Spannung, wodurch an der Stirn des Trägers weniger Druck entsteht, was den Tragekomfort weiter erhöht.

Dadurch ist eine auch lokale Einstellung der Krümmung des Rahmens möglich, und der Brillenrahmen und somit die ganze Brille können sich an die Kopfform des Trägers anpassen. Dies erhöht den Tragekomfort deutlich.

Dadurch kann erreicht werden, dass der Rahmen dicht mit der Stirn des Trägers abschließt und dadurch sowohl Wind als auch Sonne nicht zwischen dem Rahmen und der Stirn des Trägers eindringen können.

Eine solche Brille vereint die Vorteile von wenig flexiblen und flexiblen Rahmen noch mehr: Der Rahmen selbst besteht über seine gesamte Erstreckung aus einem wenig flexiblem Material, welches beim Tragen dem gesamten Rahmen Stabilität verleiht und dafür sorgt, dass ein Kontakt zwischen Brille und Kopf bzw. Stirn des Trägers stets vorhanden ist. Weitere Vorteile eines Rahmens aus wenig flexiblem Material sind die geringe Anfälligkeit für Schäden bzw. Materialdegradation bei Sonneneinstrahlung, beispielsweise zu Sprödigkeit.

Durch die mindestens eine Aussparung ist das wenig flexible Material des Rahmens dünner, wodurch die Flexibilität an dieser Stelle in eine Richtung erhöht wird. Durch das elastische Element werden an dieser Stelle die Federungs- und Dämpfungseigenschaften in eine Richtung verbessert, und dieses elastische Element nimmt Spannungen innerhalb des Rahmens auf.

Eine Spannung, welche beispielsweise durch ein Aufweiten des Rahmens beim Tragen der Brille entsteht, wird durch das mindestens eine elastische Element in der Ausnehmung aufgenommen - die weiteren Abschnitte des Rahmens stehen dadurch unter keiner bzw. weniger Spannung, wodurch an der Stirn des Trägers weniger Druck entsteht, was den Tragekomfort weiter erhöht.

Auch dadurch ist eine auch lokale Einstellung der Krümmung des Rahmens möglich, und der Brillenrahmen und somit die ganze Brille können sich an die Kopfform des Trägers anpassen. Dies erhöht den Tragekomfort deutlich.

Auch dadurch kann erreicht werden, dass der Rahmen dicht mit der Stirn des Trägers abschließt und dadurch sowohl Wind als auch Sonne nicht zwischen dem Rahmen und der Stirn des Trägers eindringen können.

Vorzugsweise weist der Rahmen im Wesentlichen die Form eines Kreisbogensegments auf, um sich der Stirn des Trägers gut anpassen zu können.

Die mindestens eine Aussparung ist mit einem elastischen Element auf der innenliegenden, der Stirn eines Benutzers zugewandten Seite des Rahmens versehen. Dadurch erfolgt die lokale Flexibilitätsverbesserung direkt an der Stelle, welche mit der Stirn des Trägers in Kontakt steht, wodurch der Rahmen an der außenliegenden Seite starrer und damit auch formstabiler, an der innenliegenden Seite aber flexibler ist, was wiederum die Vorteile von starren und flexiblen Rahmen vereint. Der Tragekomfort an der innenliegenden, der Stirn eines Benutzers zugewandten Seite des Rahmens wird erhöht, während die Stabilität des Rahmens weiterhin vorhanden ist. Auch entsteht so eine erhöhte Flexibilität in Richtung der Stirn des Trägers der Brille, während der Rahmen in der oben-unten-Richtung (also in Richtung des Nase des Trägers der Brille) starr und formstabil bleibt.

Vorzugsweise weist das Befestigungsmittel zwei Bügel auf, welche jeweils an einer Seite des Rahmens befestigt sind und dazu angepasst sind, an jeweils einer Seite des Kopfes des Trägers der Funktionsbrille anzuliegen. Weiter vorzugsweise weisen diese Bügel an ihrem hinteren Ende noch eine spezielle Vorrichtung auf, um beispielsweise am Ohr des Trägers verankert zu werden.

Weiter vorzugsweise verläuft die mindestens eine Aussparung von der oberen bis zur unteren Seite des Rahmens durchgehend und ist vorzugsweise in Form einer Nut ausgebildet. Dadurch wird sichergestellt, dass ein elastisches Element optimal aufgenommen werden kann, ohne dem Träger der Brille unangenehm zu werden.

Vorzugsweise sind zwischen 2 und 20, weiter vorzugsweise zwischen 4 und 16, noch weiter vorzugsweise zwischen 8 und 12 Aussparungen mit elastischen Elementen im Rahmen vorgesehen. Dies führt dazu, dass sich die Brille der Kontur der Stirn des Trägers gut anpassen kann und somit auch eine minimale Asymmetrie der Stirn des Trägers ausgleichen kann.

Vorzugsweise sind die Aussparungen gleichmäßig, d.h. mit ungefähr gleichem Abstand zueinander, auf der innenliegenden, der Stirn eines Benutzers zugewandten Seite des Rahmens angeordnet. Dies verbessert den Tragekomfort noch mehr, da Spannungen im Brillenrahmen so gleichmäßig abgefedert werden können.

Vorzugsweise ist die mindestens eine Aussparung vollständig mit dem elastischen Element ausgefüllt ist. Dies führt zu erhöhten Federungs- und Dämpfungseigenschaften und verstärkt deren Effekt noch mehr.

Vorzugsweise ist der Rahmen der Brille aus einem thermoplastischen Polymer gefertigt. Solche Polymere weisen in der Regel eine gute Stabilität auf, was für den Rahmen einer Sportbrille wichtig ist.

Das Material, aus welchem der Rahmen gefertigt ist, weist eine niedrigere Elastizätät auft als das elastische Element.

Weiter vorzugsweise weist das Material, aus welchem der Rahmen gefertigt ist, eine höhere Festigkeit aufweist als das elastische Element.

Weiter vorzugsweise ist das Material, aus welchem der Rahmen gefertigt ist, ein Polyamid, insbesondere Copolyamid, beispielsweise Grilamid TR-90 der Fa. EMS-Chemie AG. Dieses Material ist transparent und weist eine hohe Fallfestigkeit sowie Schlagzähigkeit

Noch weiter vorzugsweise weist das Material, aus welchem der Rahmen gefertigt ist, eine höhere Härte aufweist als das elastische Element-Vorzugsweise ist das elastische Element aus einem Polymer, vorzugsweise Elastomer, weiter vorzugsweise thermoplastischem Elastomer gefertigt.

Weiter vorzugsweise ist das elastische Element aus einem Kautschuk gefertigt.

Vorzugsweise ist das elastische Element aus einem Formgedächtnispolymer hergestellt. Dies ermöglicht es, dass selbst bei einer starken Verformung, beispielsweise bei einem Sturz des Trägers der Brille, das elastische Element nicht zerstört wird bzw. irreversibel deformiert wird.

Vorzugsweise ist das elastische Element aus einem Polymer mit Dilatanz-Eigenschaften hergestellt ist. Dies würde bei einer ruckartigen starken Bewegung beispielsweise bei einem Sturz des Trägers der Brille, die irreversible Verformung des elastischen Elements sogar verhindern.

Vorzugsweise weist die Brille ferner ein weiteres Element auf, welches sich vom Rahmen nach unten erstreckt und dazu angepasst ist, an der Nase eines Benutzers anzuliegen. Dadurch wird erreicht, dass die Augen des Trägers der Brille noch besser vor Sonnenlicht und Wind geschützt sind.

Weiter vorzugsweise ist das weitere Element mit dem durchsichtigen Element, also Brillenglas, verbunden. Somit wird der Schutzeffekt noch weiter verstärkt.

Im Folgenden wird ein bevorzugtes Ausführungsbeispiel der Brille gemäß der vorliegenden Erfindung unter Bezugnahme auf die beigefügten Zeichnungen näher erläutert.
- Fig. 1: zeigt eine isometrische Ansicht der Brille.
- Fig. 2: ist eine vergrößerte Ansicht eines Ausschnitts des Rahmens der Brille.
- Fig. 3A-3C: zeigen eine Draufsicht auf die Brille, in welcher verschiedene Krümmungsradien des Rahmens deutlich werden.

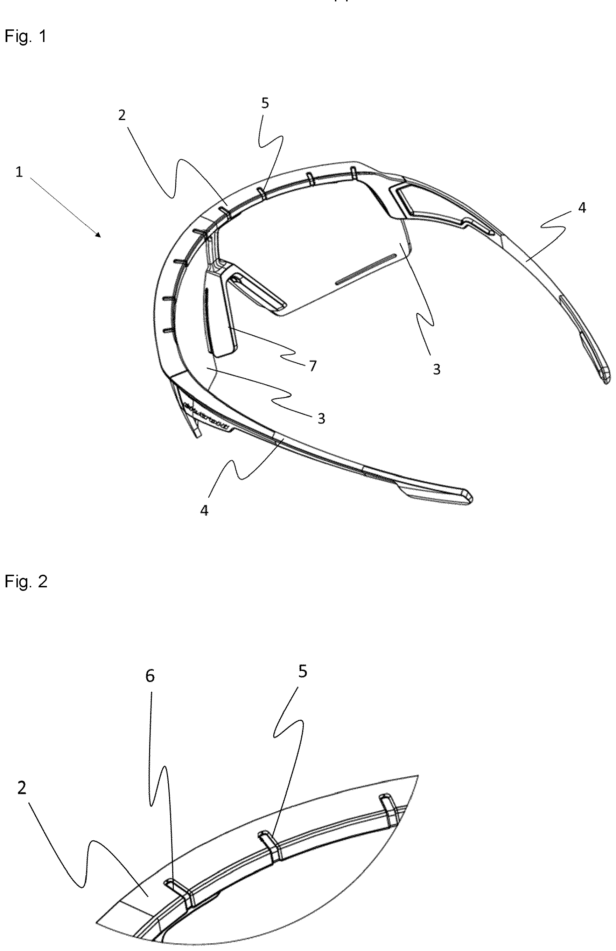

In Fig. 1 ist eine isometrische Ansicht der Brille 1 gezeigt. Sichtbar ist ein Rahmen 2, der im Wesentlichen die Form eines Kreisbogens aufweist und einen im Wesentlichen rechteckigen Querschnitt aufweist. Die Kreisbogenform kann sich der Kontur der Stirn bzw. des Kopfes des Trägers der Brille 1 anpassen. An den seitlichen Enden des Rahmens 2 sind jeweils zwei Bügel 4 angebracht, welche klappbar sein können. Ferner hält der Rahmen 2 das durchsichtige Element 3, also das Brillenglas. In Fig. 1 sind zwei Brillengläser 2 gezeigt. Ferner erstreckt sich vom Rahmen 2 ein weiteres Element 7, welches sich vom Rahmen nach unten erstreckt. Dieses weitere Element 7 ist dazu angepasst, an der Nase bzw. am Nasenbein des Trägers anzuliegen, um erstens die Brille hinreichend zu stützen und um zweitens Sonnenlicht und Wind von den Augen des Trägers der Brille 1 fernzuhalten. Auf der innenliegenden, also der Stirn des Trägers zugewandten Seite des Rahmens 2 sind mehrere Ausnehmungen 5 im Rahmen 2 angeordnet, welche ungefähr denselben Abstand voneinander haben. Diese Ausnehmungen 5 sind sozusagen Nuten bzw. Kerben, welche von einer Oberseite zu einer Unterseite des Rahmens 2 verlaufen und sich über die gesamte innenliegende, also der Stirn des Trägers zugewandten Seite des Rahmens 2 erstrecken.

In Fig. 2 ist eine Detailansicht einer Ausnehmung 5 zu sehen. Hier wird deutlich, dass in der Ausnehmung 5 ein elastisches Element 6 angeordnet ist, welches im vorliegenden Fall ein Pad aus einem Elastomer-Polymer ist und die Ausnehmug 5 fast vollständig ausfüllt. Hieraus wird deutlich, dass der Rahmen 2 auf seiner äußeren, also der Stirn des Trägers abgewandten Seite starr und wenig flexibel ist, die Flexibilität bzw. die Federkonstante an der inneren, der Stirn des Trägers zugewandten Seite des Rahmens 2 allerdings durch diese elastischen Elemente 6 verbessert wird.

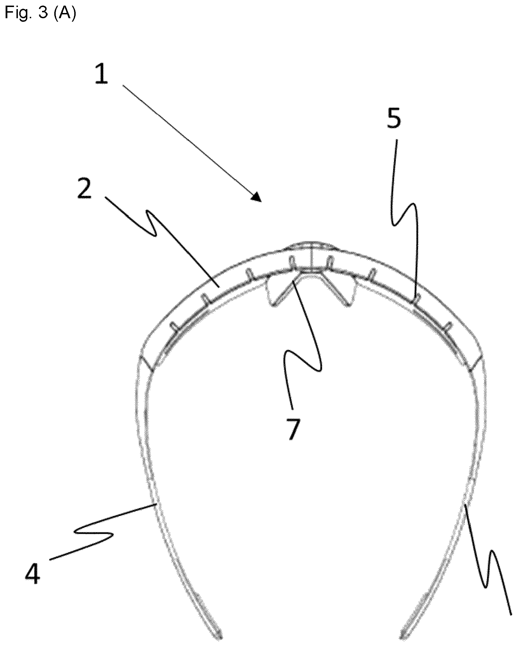

Fig. 3A bis 3C zeigen jeweils eine Draufsicht auf die Brille, wobei hier verschiedene Krümmungsradien des Rahmens 2 deutlich werden.

In Fig. 3A ist beispielsweise die Brille in ihrer Form gezeigt, in welcher sie nicht getragen wird. Die Krümmung des Rahmens 2 ist hier relativ stark, der Krümmungsradius ist also relativ klein.

Deutlich wird hier die Krümmung des Rahmens 2, welche auch einen Einfluss auf die Position der Bügel 4 aufweist. Ferner wird ersichtlich, dass in der Mitte des Rahmens 2 das weitere Element 7 zur Abstützung auf der Nase eines Trägers angeordnet ist.

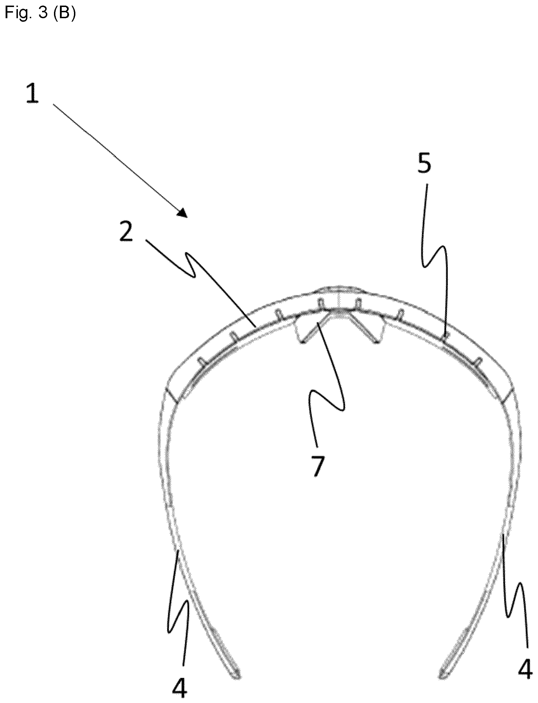

In Fig. 3B wird die erfindungsgemäße Brille 1 in einer aufgesetzten Form gezeigt, wobei hier die Stirn des Trägers relativ schmal ist. Im Vergleich zu Fig. 3A ist der Rahmen 2 der Brille 1 aufgeweitet.

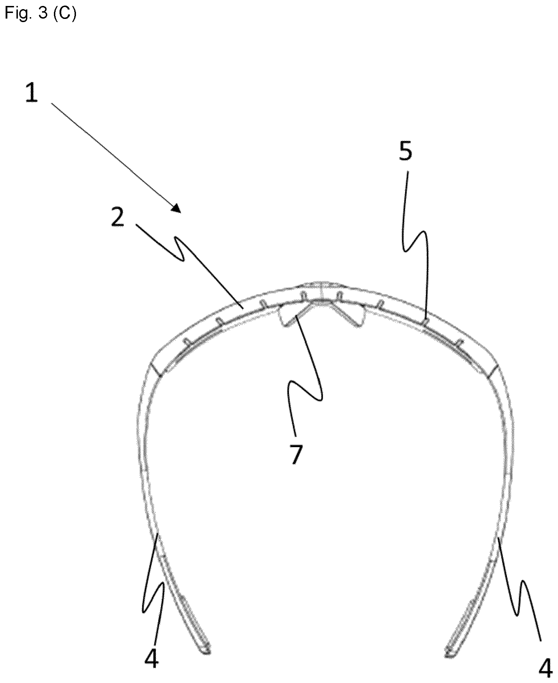

Fig. 3C zeigt ebenfalls die erfindungsgemäße Brille 1 in einem aufgesetzten Zustand, wobei hier die Stirnbreite des Trägers breiter ist als in Fig. 3B. Der Rahmen 2 ist hier also am weitesten aufgeweitet, die Krümmung des Rahmens 2 ist am geringsten und somit der Krümmungsradius am größten.

Dies zeigt, wie sich die innere Kontur des Rahmens 2 an die Form der Stirn des Trägers anpassen kann.

Die erfindungsgemäße Brille ist nicht auf die oben genannte Ausführungsform beschränkt.

Ein Rahmen 2 könnte die durchsichtigen Elemente 3, also Brillengläser, auch komplett umhüllen, es ist also möglich, dass ein oberer Rahmen 2A und ein unterer Rahmen 2B (hier nicht dargestellt) vorgesehen sind.

Auch sind die elastischen Elemente 6 nicht auf Pads aus einem Elastomer beschränkt, es könnte hier auch eine normale Feder aus Metall vorgesehen sein.

Auch weist die erfindungsgemäße Brille 1 nicht unbedingt Bügel 4 auf, die Brille könnte auch mit einem Gummiband am Kopf des Trägers befestigt werden.

## Patentansprüche

1. Brille (1), aufweisend:
einen Rahmen (2),
mindestens ein durchsichtiges Element (3), welches am Rahmen (2) befestigt ist, wobei das durchsichtige Element ein Brillenglas ist, und ein Befestigungsmittel (4), welches dazu angepasst ist, den Rahmen (2) am Kopf des Trägers zu fixieren,
wobei der Rahmen (2) mindestens eine Aussparung (5) aufweist, **dadurch gekennzeichnet dass** in der mindestens einen Aussparung (5) ein elastisches Element (6) vorgesehen ist, und
wobei die mindestens eine Aussparung (5) auf der innenliegenden, der Stirn eines Benutzers zugewandten Seite des Rahmens (2) angeordnet ist, und
wobei sich die mindestens eine Aussparung (5) auf der innenliegenden, der Stirn eines Benutzers zugewandten Seite des Rahmens (2) von oben nach unten erstreckt, und wobei die mindestens eine Aussparung (5) von der oberen bis zur unteren Seite des Rahmens (2) durchgehend verläuft, wobei das Material, aus welchem der Rahmen gefertigt ist, eine niedrigere Elastizität aufweist als das elastische Element (6).

2. Brille (1) gemäß Anspruch 1, wobei der Rahmen (2) im Wesentlichen die Form eines Kreisbogensegments aufweist.

3. Brille (1) gemäß einem der vorhergehenden Ansprüche, wobei der Rahmen (2) mindestens eine Seite des durchsichtigen Elements (3) hält, und/oder wobei das Befestigungsmittel (4) zwei Bügel (4) umfasst, welche jeweils an einer Seite des Rahmens (2) befestigt sind, welche dazu angepasst sind, an jeweils einer Seite des Kopfes des Trägers der Brille (1) anzuliegen.

4. Brille (1) gemäß einem der vorhergehenden Ansprüche, wobei der Rahmen (2) dazu angepasst ist, an der Stirn eines Benutzers, vorzugsweise in Höhe der Augenbrauen, anzuliegen.

5. Brille (1) gemäß einem der vorhergehenden Ansprüche, wobei die mindestens eine Aussparung (5) in Form einer Nut ausgebildet ist.

6. Brille (1) gemäß einem der vorhergehenden Ansprüche, wobei zwischen 2 und 20, vorzugsweise zwischen 4 und 16, weiter vorzugsweise zwischen 8 und 12 Aussparungen (5) im Rahmen (2) vorgesehen sind, wobei die Aussparungen (5) vorzugsweise gleichmäßig auf der innenliegenden, der Stirn eines Benutzers zugewandten Seite des Rahmens (2) verteilt sind.

7. Brille (1) gemäß einem der vorhergehenden Ansprüche, wobei die mindestens eine Aussparung (5) vollständig mit dem elastischen Element (6) ausgefüllt ist.

8. Brille (1) gemäß einem der vorhergehenden Ansprüche, wobei der Rahmen (2) aus einem thermoplastischen Polymer gefertigt ist.

9. Brille (1) gemäß einem der vorhergehenden Ansprüche, wobei das Material, aus welchem der Rahmen gefertigt ist, eine höhere Festigkeit aufweist als das elastische Element (6).

10. Brille (1) gemäß einem der vorhergehenden Ansprüche, wobei das Material, aus welchem der Rahmen gefertigt ist, eine höhere Härte aufweist als das elastische Element (6).

11. Brille (1) gemäß einem der vorhergehenden Ansprüche, wobei das elastische Element (6) aus einem Polymer, vorzugsweise Elastomer, gefertigt ist.

12. Brille (1) gemäß einem der vorhergehenden Ansprüche, wobei das elastische Element (6) aus einem Kautschuk, aus einem Formgedächtnispolymer oder aus einem Polymer mit Dilatanz-Eigenschaften gefertigt ist.

13. Brille (1) gemäß einem der vorhergehenden Ansprüche, ferner ein weiteres Element (7) aufweisend, welches sich vom Rahmen (2) nach unten erstreckt und dazu angepasst ist, an der Nase eines Benutzers anzuliegen, wobei das weitere Element (7) vorzugsweise mit dem durchsichtigen Element (3) verbunden ist.

## Claims

1. Spectacles (1), comprising:
a frame (2),
at least one transparent element (3), which is attached to the frame (2), wherein the transparent element is a spectacle lens,
and an attachment means (4), which is adapted to fix the frame (2) to the wearer's head,
wherein the frame (2) comprises at least one recess (5), **characterized in that** an elastic element (6) is provided in the at least one recess (5), and
wherein the at least one recess (5) is arranged on the inner side of the frame (2) facing the forehead of a user, and wherein the at least one recess (5) extends from top to bottom on the inner side of the frame (2) facing the forehead of a user, and wherein the at least one recess (5) is continuous from the top to the bottom side of the frame (2), wherein the material from which the frame is made has a lower elasticity than the elastic element (6).

2. Spectacles (1) according to claim 1, wherein the frame (2) substantially has the shape of a circular arc segment.

3. Spectacles (1) according to any one of the preceding claims, wherein the frame (2) holds at least one side of the transparent element (3), and/or wherein the attachment means (4) comprises two brackets (4), which are each attached to a side of the frame (2), which are adapted to rest against a respective side of the wearer's head of the spectacles (1).

4. Spectacles (1) according to any one of the preceding claims, wherein the frame (2) is adapted to rest against the forehead of a user, preferably at the level of the eyebrows.

5. Spectacles (1) according to any one of the preceding claims, wherein the at least one recess (5) is formed in the shape of a groove.

6. Spectacles (1) according to any one of the preceding claims, wherein between 2 and 20, preferably between 4 and 16, more preferably between 8 and 12 recesses (5) are provided in the frame (2), wherein the recesses (5) are preferably evenly distributed on the inner side of the frame (2) facing the forehead of a user.

7. Spectacles (1) according to any one of the preceding claims, wherein the at least one recess (5) is completely filled with the elastic element (6).

8. Spectacles (1) according to any one of the preceding claims, wherein the frame (2) is made of a thermoplastic polymer.

9. Spectacles (1) according to any one of the preceding claims, wherein the material from which the frame is made has a higher strength than the elastic element (6).

10. Spectacles (1) according to any one of the preceding claims, wherein the material from which the frame is made has a higher hardness than the elastic element (6).

11. Spectacles (1) according to any one of the preceding claims, wherein the elastic element (6) is made of a polymer, preferably elastomer.

12. Spectacles (1) according to any one of the preceding claims, wherein the elastic element (6) is made of a rubber, of a shape memory polymer or of a polymer with dilatancy properties.

13. Spectacles (1) according to any one of the preceding claims, further comprising a further element (7), which extends downwards from the frame (2) and is adapted to rest against the nose of a user, wherein the further element (7) is preferably connected to the transparent element (3).

## Revendications

1. Lunettes (1) comprenant :
une monture (2),
au moins un élément transparent (3) fixé à la monture (2), l'élément transparent étant un verre de lunettes,
et un moyen de fixation (4) adapté pour fixer la monture (2) à la tête du porteur, la monture (2) comprenant au moins un évidement (5),
**caractérisé en ce que**
dans l'au moins un évidement (5) est fourni un élément élastique (6), et
dans lesquelles l'au moins un évidement (5) est disposé sur le côté intérieur de la monture (2) faisant face au front d'un utilisateur, et
dans lesquelles l'au moins un évidement (5) s'étend du haut vers le bas sur le côté intérieur de la monture (2) faisant face au front d'un utilisateur, et dans lesquelles l'au moins un évidement (5) s'étend en continu du côté supérieur au côté inférieur de la monture (2), le matériau en lequel la monture est fabriquée ayant une élasticité inférieure à celle de l'élément élastique (6).

2. Lunettes (1) selon la revendication 1, dans lesquelles la monture (2) a sensiblement la forme d'un segment d'arc de cercle.

3. Lunettes (1) selon l'une quelconque des revendications précédentes, dans lesquelles la monture (2) maintient au moins un côté de l'élément transparent (3), et/ou dans lesquelles le moyen de fixation (4) comprend deux étriers (4), chacun étant fixé à un côté de la monture (2), adaptés pour venir en butée contre un côté respectif de la tête du porteur des lunettes (1).

4. Lunettes (1) selon l'une quelconque des revendications précédentes, dans lesquelles la monture (2) est adaptée pour venir en butée contre le front d'un utilisateur, de préférence au niveau des sourcils.

5. Lunettes (1) selon l'une quelconque des revendications précédentes, dans lesquelles l'au moins un évidement (5) est réalisé sous la forme d'une rainure.

6. Lunettes (1) selon l'une quelconque des revendications précédentes, dans lesquelles entre 2 et 20, de préférence entre 4 et 16, plus préférablement entre 8 et 12 évidements (5) sont fournis dans la monture (2), les évidements (5) étant de préférence répartis uniformément sur le côté intérieur de la monture (2) faisant face au front d'un utilisateur.

7. Lunettes (1) selon l'une quelconque des revendications précédentes, dans lesquelles l'au moins un évidement (5) est entièrement rempli avec l'élément élastique (6).

8. Lunettes (1) selon l'une quelconque des revendications précédentes, dans lesquelles la monture (2) est fabriquée en un polymère thermoplastique.

9. Lunettes (1) selon l'une quelconque des revendications précédentes, dans lesquelles le matériau en lequel la monture est fabriquée a une résistance supérieure à celle de l'élément élastique (6).

10. Lunettes (1) selon l'une quelconque des revendications précédentes, dans lesquelles le matériau en lequel la monture est fabriquée a une dureté supérieure à celle de l'élément élastique (6).

11. Lunettes (1) selon l'une quelconque des revendications précédentes, dans lesquelles l'élément élastique (6) est fabriqué en un polymère, de préférence un élastomère.

12. Lunettes (1) selon l'une quelconque des revendications précédentes, dans lesquelles l'élément élastique (6) est fabriqué en un caoutchouc, en un polymère à mémoire de forme ou en un polymère ayant des propriétés de dilatation.

13. Lunettes (1) selon l'une quelconque des revendications précédentes, comprenant en outre un autre élément (7) s'étendant vers le bas à partir de la monture (2) et adapté pour venir en butée contre le nez d'un utilisateur, l'autre élément (7) étant de préférence relié à l'élément transparent (3).
